# FASCICULE DE BREVET EUROPEEN

(11) **EP 2 446 197 B1**
(45) Date de publication et mention de la délivrance du brevet: **23.09.2015**
(21) Numéro de dépôt: 10723634.1
(22) Date de dépôt: 21.04.2010
(51) Int. Cl.: F24F 1/00, F24F 5/00, F24H 3/08, F24D 5/04

(54) **RADIATEUR REVERSIBLE**
REVERSIBLER HEIZKÖRPER
REVERSIBLE RADIATOR

(30) Priorité: 23.06.2009 FR 0903044
(43) Date de publication de la demande: 02.05.2012
(73) Titulaire: Cinier Radiateurs, Sarl, 34200 Sete (FR)
(72) Inventeur: CINIER, Michel, F-34200 Sete (FR); CINIER, Stéphane, F-34200 Sete (FR)
(74) Mandataire: Gosse, Michel
(86) Numéro de dépôt international: PCT/FR2010/000321
(87) Numéro de publication internationale: WO 2010/149865

(56) Documents cités:
- EP-A- 1 361 398
- EP-A- 1 772 678
- EP-A- 1 878 978
- WO-A-2007/060922
- DE-A1- 10 329 611
- GB-A- 2 378 502
- JP-A- 11 148 711

## Description

### DOMAINE DE L'INVENTION

La présente invention concerne le domaine des radiateurs réversibles du genre comprenant :
- un échangeur du type constitué d'un corps à ailettes et d'une tubulure traversée par un fluide caloporteur chauffant ou réfrigérant ;
- un moyen de ventilation destiné à aspirer l'air ambiant, à forcer son passage au travers de l'échangeur et à le rejeter, chauffé ou refroidi, dans la pièce ;
- une carcasse, contenant ledit échangeur et ledit moyen de ventilation, pourvue d'au moins une ouverture d'entrée d'air et d'au moins une ouverture de sortie d'air ;
- une plaque, à accumulation et à diffusion de calories ou frigories, fixée à la paroi frontale de ladite carcasse.

### ARRIERE PLAN TECHNOLOGIQUE

Les radiateurs connus du genre en question comportent généralement un seul module échangeur, un ou deux ventilateurs alimentés par du courant alternatif et une sortie d'air qui se trouve généralement en haut, en bas et/ou sur les côtés.

De tels dispositifs présentent les inconvénients liés au fait que :
- les ventilateurs sont volumineux et ont une incidence sur l'épaisseur des radiateurs, ils sont bruyants et consomment de l'énergie ;
- le rendement thermique entre l'air pulsé et l'échangeur n'est pas optimisé ;
- la sortie d'air latérale est moins efficace qu'une sortie d'air frontale.

Parmi les documents de l'état de la technique les plus proches, on peut citer :
- le document EP1878978 qui décrit un climatiseur réversible, fixé au plafond, comprenant une unité d'ajustement de température contenant un échangeur et un moyen de ventilation, une chambre de diffusion placée en sortie de ladite unité et une plaque, radiante et perméable à l'air, fermant totalement ladite chambre, conçue en un matériau fibreux ;
- le document JP11148711 qui décrit un climatiseur comprenant deux ventilateurs disposés l'un à côté de l'autre, deux modules d'échangeur disposés de chaque côté de la rangée de ventilateurs et deux ouvertures disposées de chaque côté de ces derniers.

### RESUME DE L'INVENTION

L'invention vise à réaliser un radiateur du genre en question présentant des caractéristiques nouvelles et originales et dont le but principal est de diminuer, voire supprimer, les inconvénients susmentionnés, à savoir :
- diminuer l'épaisseur, le niveau sonore et la consommation d'énergie ;
- améliorer le rendement thermique en optimisant la circulation de l'air aspiré et pulsé et l'échange thermique.

A cet effet, le radiateur selon l'invention se caractérise essentiellement en ce que :
- le moyen de ventilation est constitué d'une pluralité de ventilateurs, hélicoïdes, alimentés en courant continu basse tension, disposés, les uns à côté des autres, le long de l'axe de symétrie de la paroi frontale de la carcasse, face et perpendiculairement à l'ouverture de sortie, longitudinale, de ladite paroi frontale : une telle configuration permet une meilleure répartition de l'air aspiré et pulsé, possède un meilleur rendement sonore, réduit l'épaisseur des radiateurs et permet une économie d'énergie car ils sont alimentés en courant continu basse tension 12-24 ou 48 Volts qui divise par deux la consommation des ventilateurs à courant alternatif ;
- l'échangeur est réalisé en au moins deux modules disposés de chaque côté de la rangée de ventilateurs, parallèlement à celle-ci, et l'ouverture d'entrée d'air est constituée d'ouvertures longitudinales disposées de chaque côté externe de chaque module d'échangeur, parallèlement à ceux-ci : dans une telle configuration, tout l'air aspiré passe au travers de la totalité de la surface d'échange et ce d'autant plus que les parois du radiateur sont plus rapprochées que celles d'un radiateur standard ; en outre, l'utilisation d'eau comme fluide caloporteur constitue un avantage par rapport à l'aspect de respect de l'environnement, diminuant ainsi la quantité de fluide frigorigène des installations par pompe à chaleur et le risque de fuite de ceux-ci ; néanmoins, l'échangeur du radiateur selon l'invention pourrait aussi utiliser ce type de fluide ;
- la plaque, à accumulation et à diffusion de calories ou frigories, est disposée à une distance de la paroi frontale de la carcasse et est dimensionnée pour permettre le passage de l'air chauffé ou réfrigéré pulsé et sa diffusion dans la pièce entre la périphérie de la carcasse et la périphérie de ladite plaque, perpendiculairement à celle-ci : une telle configuration permet une meilleure diffusion de l'air dans la pièce et la plaque à inertie thermique permet une meilleure régulation des calories transmises par radiation ; en outre, cette circulation de l'air en convection naturelle verticale et non en convection classique permet de donner une température identique au sol comme au plafond pour un meilleur confort et un gain important d'économie d'énergie.

Selon des modes particuliers de réalisation de l'invention :
- la plaque, à accumulation et à diffusion de calories ou frigories, est réalisée en un matériau choisi parmi du métal, du verre ou un minéral moulé pouvant avoir une face extérieure décorative ;.
- les ventilateurs sont fixés à la carcasse au moyen de blocs élastiques en caoutchouc de type « silentbloc® » et traversent une feuille de silicone qui recouvre l'ouverture de sortie : cette dernière a une double fonction, celle d'assurer l'étanchéité et celle de faire écran aux vibrations ;
- la tubulure de deux modules verticaux est doublée de manière à affecter une tubulure à un fluide caloporteur véhiculant des calories et l'autre tubulure à un fluide caloporteur véhiculant des frigories, les extrémités libres des tubulures étant reliées à une double vanne « 4 voies » ;
- les ouvertures d'entrée d'air, qui sont équipées de filtres, sont réalisées sur une paroi de la carcasse qui se trouve à une distance du fond du radiateur, donc du mur sur lequel il est posé, permettant le passage d'une tête d'aspiration, de forme appropriée, directement connectable à un aspirateur domestique, évitant le démontage des filtres et permettant d'effectuer aisément un entretien récurrent.

Les carcasses des radiateurs peuvent être carrées ou rectangulaire et dans ce dernier cas elles peuvent être disposées verticalement ou horizontalement.

D'autres avantages découlent des caractéristiques susmentionnées :
- poids de l'ensemble réduit ;
- facilité d'installation ;
- adaptation à tous générateurs (haute température, basse température, très basse température, eau glacée).

Les objectifs ont été atteints grâce à une sélection, un dimensionnement et une disposition spécifiques des divers sous-ensembles constitutifs qui semblent ne pas être enseignés dans l'état de la technique cité.

En effet :
- le trajet de l'air entre les entrées situées à l'arrière (face à la paroi support) et la sortie frontale est tout à fait nouveau et optimisé pour exploiter au mieux le volume disponible et les échanges thermiques et ce avec le minimum de turbulences ;
- le positionnement des entrées et sorties d'air, des échangeurs et des ventilateurs, associés à la plaque à accumulation, concourent à l'obtention du résultat recherché. Le moyen de ventilation a pour avantages d'avoir une consommation énergétique très faible par rapport aux systèmes traditionnels qui sont tous équipés en ventilateurs centrifuges à action, ou à réaction, ou en ventilateurs tangentiels ; une très faible épaisseur permettant à l'ensemble du radiateur réversible d'avoir une épaisseur inférieure à 120mm ; un niveau sonore des plus bas (inaudible à petite vitesse).

La plaque à accumulation permet une diffusion d'air linéaire importante, car sur toute la périphérie de la dite plaque, exerçant un flux d'air horizontal à très basse vitesse, donnant un confort par l'absence de courant d'art (sortie inférieure à 0.5 m/s).

Cette plaque possède les fonctions suivantes : cacher la pluralité des ventilateurs ; absorber l'émission sonore provoquée par le flux d'air des dits ventilateurs ; absorber une partie des calories ou frigories pour la restituer par rayonnement ; diffuser le flux d'air d'une façon linéaire et homogène autour de la périphérie de la plaque, en réduisant la vitesse de sortie de l'air, diminuant considérablement l'effet courant d'air, et le niveau sonore induit par le passage de l'air ; servir de support pour la décoration du radiateur (elle est facilement interchangeable).

Le confort est augmenté par le rayonnement de la façade permettant une diffusion complémentaire statique, dans le dispositif de filtration de l'air, celui-ci est accessible pour un nettoyage facile, sans démontage des filtres, grâce à un embout spécifique adaptable à tous les aspirateurs ménager. La cause principale du non respect de l'entretien primaire des appareils de conditionnements d'air est induite par l'obligation de démontage des systèmes de filtrations pour leur nettoyage.

La façade à accumulation est interchangeable afin de changer le design (décor) du radiateur sans avoir à remplacer toute la structure.

Le radiateur peut être constitué de deux parties dissociables d'un poids égal, permettant une installation facile (voire par une seule personne).

La solidarité des deux parties peut être assurée par deux fermoirs à levier (facilitant ainsi le démontage).

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

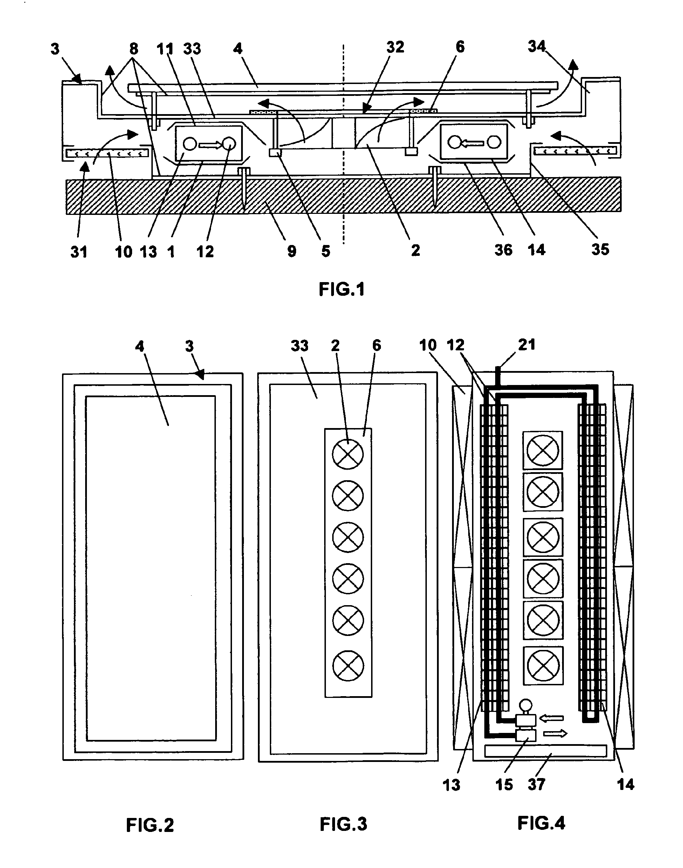

- la figure 1 est une vue en coupe transversale du radiateur selon l'invention ;
- la figure 2 est une vue de dessus du radiateur complet ;
- la figure 3 est une vue de dessus du radiateur sans la plaque frontale ;
- la figure 4 est une vue de dessus du radiateur sans la carcasse supérieure ;

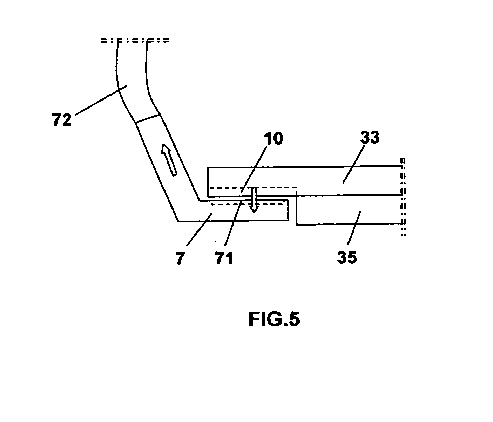

- la figure 5 est une vue de profil de la tête d'aspiration selon l'invention en action contre le filtre.

### DESCRIPTION DETAILLEE DE L'INVENTION

Le radiateur réversible représenté est du genre comprenant :
- un échangeur (1) du type constitué d'un corps à ailettes (11) et d'une tubulure (12) traversée par un fluide caloporteur chauffant ou réfrigérant ;
- un moyen de ventilation (2) destiné à aspirer l'air ambiant, à forcer son passage au travers de l'échangeur (1) et à le rejeter, chauffé ou refroidi, dans la pièce ;
- une carcasse (3), contenant ledit échangeur (1) et ledit moyen de ventilation (2), pourvue d'au moins une ouverture d'entrée d'air (31) et d'au moins une ouverture de sortie d'air (32) ;
- une plaque (4), à accumulation et à diffusion de calories ou frigories, fixée à la paroi frontale (33) de ladite carcasse (3).

L'originalité de l'invention consiste en la combinaison des sous-ensembles suivants :
- le moyen de ventilation qui est constitué d'une pluralité de ventilateurs (2), hélicoïdes, alimentés en courant continu basse tension, disposés, les uns à côté des autres, le long de l'axe de symétrie de la paroi frontale (33) de la carcasse (3), face et perpendiculairement à l'ouverture de sortie (32), longitudinale, de ladite paroi frontale (33) ;
- l'échangeur (1) qui est réalisé en au moins deux modules (13) et (14) disposés de chaque côté de la rangée de ventilateurs (2), parallèlement à celle-ci ;
- l'ouverture d'entrée d'air (31) qui est constituée d'ouvertures longitudinales disposées de chaque côté externe de chaque module d'échangeur (13,14), parallèlement à ceux-ci,
- la plaque (4), à accumulation et à diffusion de calories ou frigories, qui est disposée à une distance de la paroi frontale (33) de la carcasse (3) et est dimensionnée pour permettre le passage de l'air chauffé ou réfrigéré pulsé et sa diffusion dans la pièce entre la périphérie (34) de la carcasse (3) et la périphérie de ladite plaque (4), perpendiculairement à celle-ci.

La partie dorsale (35) de la carcasse (3) s'appuie contre le mur (9) pour y être fixée. D'autres particularités de l'invention concernent :
- la plaque (4), à accumulation et à diffusion de calories ou frigories, qui est réalisée en un matériau choisi parmi du métal, du verre ou un minéral moulé ;
- les ventilateurs (2) qui sont fixés à la carcasse (3) au moyen de blocs élastiques en caoutchouc (5) de type « silentbloc® » et qui traversent une feuille de silicone (6) qui recouvre l'ouverture de sortie (32) ;

Les tubulures (12) appartenant à deux modules d'échangeur (13) et (14) sont reliées entre elles à une extrémité.

Les extrémités libres de la tubulure (12) sont reliées à une vanne «4 voies » (15) motorisée.

La tubulure (12) de deux modules verticaux (13) et (14) peut être doublée de manière à affecter une tubulure à un fluide caloporteur véhiculant des calories et l'autre tubulure à un fluide caloporteur véhiculant des frigories, les extrémités libres des tubulures (12) étant reliées à une double vanne « 4 voies ».

Les ouvertures d'entrée d'air (31), qui sont équipées de filtres (10), sont réalisées sur une paroi de la carcasse (3) qui se trouve à une distance du fond du radiateur, donc du mur sur lequel il est posé, permettant le passage d'une tête d'aspiration (7), de forme et de dimensions appropriée, pourvue d'une fente longitudinale (71), directement connectable au flexible (72) d'un aspirateur domestique.

Le radiateur comporte :
- en regard de chaque module d'échangeur (13) et (14), des joues (36) de récupération des condensats qui se déversent dans un bac (37) ;
- en partie haute de la tubulure un moyen de purge (21) ;
- un isolant (8) qui est mis en place pour les appareils mixtes et pour les appareils refroidissants seuls mais pas pour les appareils chauffants seuls.

Il comporte également un moyen de régulation électronique de la température, manuel ou automatique, simple d'accès et d'utilisation, agissant, en fonction de l'écart de température existant entre l'air ambiant et la consigne :
- sur les vitesses de ventilation avec la possibilité d'empêcher toute ventilation en mode chauffage si la température de l'air soufflé est égale ou inférieure à la température ambiante ;
- sur la ou les vannes « 4 voies » motorisées.
- un moyen de pilotage à distance de un ou plusieurs radiateurs par transmission par courant porteur.

Il peut également comporter une résistance électrique d'appoint (non représentée) située dans le volume d'air ventilé ou dans la plaque frontale (4).

Bien entendu, l'homme de métier sera apte à réaliser l'invention telle que décrite et représentée en appliquant et en adaptant des moyens connus sans qu'il soit nécessaire de les décrire ou de les représenter.

Il pourra également prévoir d'autres variantes sans pour cela sortir du cadre de l'invention qui est déterminé par la teneur des revendications.

## Revendications

1. Radiateur réversible comprenant :
- un échangeur (1) du type constitué d'un corps à ailettes (11) et d'une tubulure (12) traversée par un fluide caloporteur chauffant ou réfrigérant ;
- un moyen de ventilation (2) destiné à aspirer l'air ambiant, à forcer son passage au travers de l'échangeur (1) et à le rejeter, chauffé ou refroidi, dans la pièce ;
- une carcasse (3), contenant ledit échangeur (1) et ledit moyen de ventilation (2), pourvue d'au moins une ouverture d'entrée d'air (31) et d'au moins une ouverture de sortie d'air (32) ;
- une plaque (4), à accumulation et à diffusion de calories ou frigories, fixée à la paroi frontale (33) de ladite carcasse (3) ;
**caractérisé en ce que** le moyen de ventilation est constitué d'une pluralité de ventilateurs (2), hélicoïdes, alimentés en courant continu basse tension, disposés, les uns à côté des autres, le long de l'axe de symétrie de la paroi frontale (33) de la carcasse (3), face et perpendiculairement à l'ouverture de sortie (32), longitudinale, de ladite paroi frontale (33) ;
**en ce que** l'échangeur (1) est réalisé en au moins deux modules (13) et (14) disposés de chaque côté de la rangée de ventilateurs (2), parallèlement à celle-ci ;
**en ce que** l'ouverture d'entrée d'air (31) est constituée d'ouvertures longitudinales disposées de chaque côté externe de chaque module d'échangeur (13,14), parallèlement à ceux-ci ;
et en ce la plaque (4), à accumulation et à diffusion de calories ou frigories, est disposée à une distance de la paroi frontale (33) de la carcasse (3) et est dimensionnée pour permettre le passage de l'air chauffé ou réfrigéré pulsé et sa diffusion dans la pièce entre la périphérie (34) de la carcasse (3) et la périphérie de ladite plaque (4), perpendiculairement à celle-ci.

2. Radiateur, selon la revendication 1, **caractérisé en ce que** la plaque (4), à accumulation et à diffusion de calories ou frigories, est réalisée en un matériau choisi parmi du métal, du verre ou un minéral moulé.

3. Radiateur, selon la revendication 1, **caractérisé en ce que** les ventilateurs (2) sont fixés à la carcasse (3) au moyen de blocs élastiques en caoutchouc (5) de type « silentbloc® » et traversent une feuille de silicone (6) qui recouvre l'ouverture de sortie (32).

4. Radiateur, selon la revendication 1, **caractérisé en ce que** les tubulures (12) appartenant à deux modules d'échangeur (13) et (14) sont reliées entre elles à une extrémité.

5. Radiateur, selon la revendication 4, **caractérisé en ce que** les extrémités libres de la tubulure (12) sont reliées à une vanne « 4 voies » motorisée (15).

6. Radiateur, selon les revendications 4 et 5, **caractérisé en ce que** la tubulure (12) de deux modules verticaux (13) et (14) est doublée de manière à affecter une tubulure à un fluide caloporteur véhiculant des calories et l'autre tubulure à un fluide caloporteur véhiculant des frigories, les extrémités libres des tubulures (12) étant reliées à une double vanne « 4 voies ».

7. Radiateur, selon la revendication 1, **caractérisé en ce que** les ouvertures d'entrée d'air (31), qui sont équipées de filtres (10), sont réalisées sur une paroi de la carcasse (3) qui se trouve à une distance du fond du radiateur, donc du mur sur lequel il est posé, permettant le passage d'une tête d'aspiration (7), de forme et de dimensions appropriés, pourvue d'une fente longitudinale (71), directement connectable au flexible (72) d'un aspirateur domestique.

8. Radiateur, selon la revendication 1, **caractérisé en ce qu'**il comporte, en regard de chaque module d'échangeur (13) et (14), des joues (36) de récupération des condensats qui se déversent dans un bac (37).

9. Radiateur, selon la revendication 1, **caractérisé en ce qu'**il comporte un moyen de régulation électronique de la température, manuel ou automatique, agissant, en fonction de l'écart de température existant entre l'air ambiant et la consigne :
- sur les vitesses de ventilation avec la possibilité d'empêcher toute ventilation en mode chauffage si la température de l'air soufflé est égale ou inférieure à la température ambiante ;
- sur la ou les vannes « 4 voies » motorisées.

10. Radiateur, selon la revendication 1, **caractérisé en ce qu'**il comporte une résistance électrique d'appoint située dans le volume d'air ventilé ou dans la plaque frontale (4).

## Patentansprüche

1. Umkehrbarer Radiator, folgendes umfassend:
- einen Wärmetauscher (1), der aus einem Rippenkörper (11) und einer Leitung (12) gebildet wird, durch die ein Wärmeträgermedium zum Heizen oder Kühlen fließt;
- ein Lüftungsmittel (2), das dazu bestimmt ist, die Umgebungsluft anzusaugen, diese durch den Wärmetauscher (1) zu führen und sie danach beheizt oder gekühlt wieder in den Raum abzugeben;
- ein Gehäuse (3), den besagten Wärmetauscher (1) und das besagte Lüftungsmittel (2) umfassend, das zumindest mit einer Lufteinlassöffnung (31) und mit zumindest einer Luftauslassöffnung (32) versehen ist;
- eine Platte (4) zum Kumulieren und Abgeben von Kalorien oder Frigorien, die auf der Stirnwand (33) des besagten Gehäuses (3) befestigt ist;
**dadurch gekennzeichnet, dass** das Lüftungsmittel aus einer Vielzahl von Axiallüftern (2) gebildet wird, die mit Niederspannungsgleichstrom versorgt werden und die nebeneinander entlang der Symmetrieachse der Stirnwand (33) des Gehäuses (3), gegenüber und senkrecht zur Längsauslassöffnung (32) der besagten Stirnwand (33) angeordnet sind;
dass der Wärmetauscher (1) aus zumindest zwei Modulen (13) und (14) gebildet wird, die beiderseits der Lüfterreihe (2) und parallel dazu angeordnet sind;
dass die Lufteinlassöffnung (31) aus Längsöffnungen gebildet wird, die an jeder Außenseite eines jeden Wärmetauschers (13, 14) und parallel dazu angeordnet sind; und, dass die Platte (4) zum Kumulieren und Abgeben von Kalorien oder Frigorien in einem Abstand zur Stirnwand (33) des Gehäuses (3) angeordnet ist, und so bemessen ist, um den Durchlauf der pulsierenden erwärmten oder gekühlten Luft und deren Abgabe in den Raum zwischen dem Rand (34) des Gehäuses (3) und dem Rand der besagten Platte (4), senkrecht dazu, zu ermöglichen.

2. Radiator nach Anspruch 1, **dadurch gekennzeichnet, dass** die Platte (4) zum Kumulieren und Abgeben von Kalorien oder Frigorien aus einem Werkstoff gefertigt ist, der aus Metall, Glas oder einem geformten Mineral ausgewählt wird.

3. Radiator nach Anspruch 1, **dadurch gekennzeichnet, dass** die Lüfter (2) mithilfe von elastischen Blöcken aus Gummi (5) nach Art eines "Silentbloc®" auf dem Gehäuse (3) befestigt sind, und eine Silikonfolie (6) durchströmen die die Auslassöffnung (32) bedeckt.

4. Radiator nach Anspruch 1, **dadurch gekennzeichnet, dass** die zu den beiden Wärmetauschermodulen (13) und (14) gehörenden Leitungen (12) an einem Ende miteinander verbunden sind.

5. Radiator nach Anspruch 4, **dadurch gekennzeichnet, dass** die freien Enden der Leitung (12) mit einem motorisierten "4-Wege"-Ventil (15) verbunden sind.

6. Radiator nach den Ansprüchen 4 und 5, **dadurch gekennzeichnet, dass** die Leitung (12) von zwei vertikalen Modulen (13) und (14) derart gedoppelt ist, dass eine Leitung für ein Wärmeträgermedium verwendet wird, das Kalorien transportiert, und die andere Leitung für ein Wärmeträgermedium, das Frigorien transportiert, wobei die freien Enden der Leitungen (12) mit einem doppelten "4-Wege"-Ventil verbunden sind.

7. Radiator nach Anspruch 1, **dadurch gekennzeichnet, dass** die Lufteinlassöffnungen (31), die mit Filtern (10) ausgestattet sind, an einer Wand des Gehäuses (3) ausgeführt sind, die sich in einem Abstand zur Rückseite des Radiators befindet, also zur Mauer, an der er montiert wird, wodurch der Durchlass eines Saugkopfes (7) in geeigneter Form und Bemessung möglich ist, der mit einem Längsschlitz (71) versehen ist, der direkt an den Schlauch (72) eines Hausstaubsaugers angeschlossen werden kann.

8. Radiator nach Anspruch 1, **dadurch gekennzeichnet, dass** er gegenüber von jedem Wärmetauschermodul (13) und (14), Wannen (36) zum Auffangen der Kondensate umfasst, die in einen Behälter (37) fließen.

9. Radiator nach Anspruch 1, **dadurch gekennzeichnet, dass** er über ein manuelles oder automatisches Mittel zur elektronischen Regelung der Temperatur umfasst, das je nach Temperaturdifferenz zwischen der Umgebungsluft und dem Sollwert:
- auf die Lüftungsgeschwindigkeiten mit der Möglichkeit einwirkt, jede Lüftung im Heizmodus zu verhindern, wenn die Temperatur der Blasluft kleiner oder gleich der Umgebungstemperatur ist;
- auf das oder die motorisierte(n) "4-Wege"-Ventil(e) einwirkt.

10. Radiator nach Anspruch 1, **dadurch gekennzeichnet, dass** er einen unterstützenden elektrischen Widerstand umfasst, der sich im Blasluftvolumen oder in der Stirnplatte (4) befindet.

## Claims

1. Reversible radiator comprising:
- a heat exchanger (1) of the type consisting of a finned body (11) and a manifold (12) through which a heating or refrigerating heat-transfer fluid passes;
- a ventilation means (2) intended to suck in ambient air, to force passage thereof through the heat exchanger (1) and to discharge it, heated or cooled, into the room;
- a casing (3), containing said heat exchanger (1) and said ventilation means (2), provided with at least one air-inlet opening (31) and at least one air-outlet opening (32);
- a plate (4), for accumulating and diffusing heat or cold, fixed to the front wall (33) of said casing (3);
**characterised in that** the ventilation means consist of a plurality of helical fans (2), supplied with low-voltage DC current, disposed, alongside one another, along the axis of symmetry of the front wall (33) of the casing (3), facing and perpendicular to the longitudinal outlet opening (32) of said front wall (33);
**in that** the heat exchanger (1) is produced in at least two modules (13) and (14) disposed on each side of the row of fans (2), parallel to it;
**in that** the air-inlet opening (31) consists of longitudinal openings disposed on each external side of each heat-exchanger module (13, 14), parallel to these;
and **in that** the plate (4), for accumulation and/or diffusion of heat or cold, is disposed at a distance from the front wall (33) of the casing (3) and is sized so as to allow passage of the blown heated or refrigerated air and diffusion thereof in the room between the periphery (34) of the casing (3) and the periphery of said plate (4), perpendicular thereto.

2. Radiator according to claim 1, **characterised in that** the plate (4) for accumulating and diffusing heat or cold is produced from a material chosen from metal, glass or a moulded mineral.

3. Radiator according to claim 1, **characterised in that** the fans (2) are fixed to the casing (3) by means of resilient rubber blocks (5) of the "Silentbloc®" type and pass through a sheet of silicone (6) that covers the outlet opening (32).

4. Radiator according to claim 1, **characterised in that** the manifolds (12) belonging to two heat-exchanger modules (13) and (14) are connected together at one end.

5. Radiator according to claim 4, **characterised in that** the free ends of the manifold (12) are connected to a motorised four-way valve (15).

6. Radiator according to claims 4 and 5, **characterised in that** the manifold (12) of two vertical modules (13) and (14) is duplicated so as to allocate one manifold to a heat-transfer fluid conveying heat and the other manifold to a heat-transfer fluid conveying cold, the free ends of the manifolds (12) being connected to a double four-way valve.

7. Radiator according to claim 1, **characterised in that** the air-inlet openings (31), which are equipped with filters (10), are produced on a wall of the casing (3) that is situated at a distance from the bottom of the radiator and therefore from the wall on which it is placed, enabling a suction head (7) to pass, with suitable shape and dimensions, provided with a longitudinal slot (71), directly connectable to the hose (72) of a domestic vacuum cleaner.

8. Radiator according to claim 1, **characterised in that** it comprises, opposite each heat-exchanger module (13) and (14), cheeks (36) for recovering condensates, which flow into a tank (37).

9. Radiator according to claim 1, **characterised in that** it comprises an electronic temperature regulation means, manual or automatic, acting, according to the temperature difference existing between the ambient air and the set point:
- on ventilation rates with the possibility of preventing any ventilation in heating mode if the temperature of the blown air is equal to or less than the ambient temperature;
- on the motorised four-way valve or valves.

10. Radiator according to claim 1, **characterised in that** it comprises an auxiliary electric element situated in the ventilated air space or in the front plate (4).
